(19) **Europäisches Patentamt**

**European Patent Office**

**Office européen des brevets**

(11) Veröffentlichungsnummer: **0 311 906 B1**

(12) **EUROPÄISCHE PATENTSCHRIFT**

(45) Veröffentlichungstag der Patentschrift: **19.01.94**

(51) Int. Cl.5: **C08F 220/12**, C08F 2/24, C09D 133/08

(21) Anmeldenummer: **88116552.6**

(22) Anmeldetag: **06.10.88**

(54) **Wässrige Polyacrylatdispersionen oder Polyacrylatemulsionen, diese enthaltende Beschichtungsmittel, Verfahren zu deren Herstellung sowie deren Verwendung.**

(30) Priorität: **14.10.87 DE 3734755**

(43) Veröffentlichungstag der Anmeldung:
**19.04.89 Patentblatt 89/16**

(45) Bekanntmachung des Hinweises auf die Patenterteilung:
**19.01.94 Patentblatt 94/03**

(84) Benannte Vertragsstaaten:
**AT BE DE ES FR GB IT SE**

(56) Entgegenhaltungen:
**EP-A- 0 115 694**
**DE-A- 3 729 790**

(73) Patentinhaber: **Henkel Kommanditgesellschaft auf Aktien**

**D-40191 Düsseldorf(DE)**

(72) Erfinder: **Geke, Jürgen, Dr.**
**Stoffeler Damm 108**
**D-4000 Düsseldorf 1(DE)**
Erfinder: **Meyer, Dieter**
**Bahlenstrasse 99**
**D-4000 Düsseldorf 13(DE)**
Erfinder: **Schieferstein, Ludwig, Dr.**
**Am Hang 15**
**D-4030 Ratingen 1(DE)**
Erfinder: **Schönauer, Judith**
**Hühnerweg 3**
**D-4000 Düsseldorf 31(DE)**

**Beschreibung**

Die Erfindung betrifft wäßrige Polyacrylatdispersionen oder Polyacrylatemulsionen und Beschichtungsmittel auf Basis dieser wäßrigen Dispersionen bzw. Emulsionen, die zur Ausbildung von Schutzüberzügen geeignet sind, wie sie beispielsweise bei dem temporären Schutz von Automobilkarosserien, Maschinen bzw. Maschinenteilen, Werkzeugen und anderen metallischen oder nichtmetallischen Gegenständen während des Transports und/oder der Lagerung insbesondere gegen klimatische und/oder mechanische Einflüsse zum Einsatz kommen. Die Erfindung will dabei insbesondere die Schaffung solcher Schutzüberzugsmassen ermöglichen, die beim Einsatz einen wirkungsvollen temporären Schutz ermöglichen, gleichzeitig aber mittels geeigneter wäßriger Lösungen leicht von den temporär zu schützenden Oberflächen entfernt werden können. Weiterhin betrifft die Erfindung Verfahren zur Herstellung obiger Dispersionen und Beschichtungsmittel.

Zum zeitweiligen Schutz von Autokarosserien beim Transport und der Lagerung in nicht überdachten Hallen oder gänzlich im Freien werden vielfach Überzüge auf Basis von Wachsen verwendet. Diese werden in organischen Lösungsmitteln gelöst oder aber auch als wäßrige Dispersionen eingesetzt. Wenngleich die technischen Eigenschaften derartiger Wachszubereitungen für viele Anwendungen ausreichen, so zeigen sie doch den Nachteil geringer mechanischer Stabilität insbesondere bei einer Erwärmung durch beispielsweise Sonneneinstrahlung.

Es hat daher Bemühungen gegeben, wieder entfernbare Schutzüberzüge auf Basis synthetischer Polymerer zu schaffen, die sich durch bessere mechanische Eigenschaften auszeichnen.

Überzüge, die aus Polyacrylatdispersionen erhalten worden sind und die mit schwach alkalischen Reinigungslösungen wieder entfernbar sind, werden in Chemical Abstracts, Vol 83 (1975), Seite 109, Referat 83: 165 970 t beschrieben. Hier sollen Säuregruppen enthaltende Acrylate in Form ethanolischer Lösungen eingesetzt werden. Auch hier ist also die Verwendung eines organischen Lösungsmittels vorgesehen. Demgegenüber schlägt Chemical Abstracts, Vol 84 (1976) Seite 79, Referat 84: 181 720 n vor, Schutzkolloide enthaltende Dispersionen von Acrylat-Copolymeren mit einem Gehalt bis zu 5 % Säuren in Gegenwart geringer Restlösungsmittelmengen einzusetzen. Zwar ist hier die Problematik der Mitverwendung von Lösungsmitteln bereits weitgehend eingeschränkt, die geringe Säurezahl der Acrylat-Copolymeren erschwert jedoch das Wiederauflösen der Überzüge nach Lagerung. Weiterhin ist zu befürchten, daß die Überzüge vor einer vollständigen Durchtrocknung zur Redispergierung neigen. Dies ist von beträchtlicher Bedeutung, wenn beispielsweise etwa frisch überzogene Kraftfahrzeuge bzw. Karosserien sofort dem Regen ausgesetzt werden.

Die US-PS 3 580 972 beschreibt wasserlösliche oder dispergierbare Beschichtungsmischungen aus einem Vinylalkoxylat/ungesättigten Mono- oder Polycarbonsäurecopolymer oder einem Vinylalkoxylat/ungesättigten Mono- oder Polycarbonsäure/ungesättigten Mono- oder Polycarbonsäurealkylester-Terpolymer. Die Applikation erfolgt aus wäßriger und/oder organischer Phase.

Die GB 1 170 823 beschreibt hochschmelzende temporäre, entfernbare Beschichtungen, bestehend aus 30 bis 60 Gew.-% eines langkettigen ALkylaminsalzes eines Partialesters eines Vinylether/MSA/Copolymers, 20 bis 50 Gew.-% eines Weichmachers und 5 bis 30 Gew.-% eines korrosionshindernden Mineralöls. Die Applikation erfolgt durch Eintauchen des Metallgegenstandes in die Schmelze bei 170 °C.

EP-A-0 162 611 beschreibt wäßrige Beschichtungsmittel, die alkalilöslich sind und als Korrosionsschutz auf Metalloberflächen appliziert werden können. Die dort beschriebenen Polyacrylatdispersionen auf Basis von Alkylacrylat, Acrylsäure und Acrylamid werden nach der Polymerisation vollständig mit Ammoniak neutralisiert, so daß diese Polymerlösungen bei ihrer Verwendung einen pH-Wert von 9 besitzen. Aus der Beschreibung und den Beispielen folgt weiterhin, daß die Copolymere bevorzugt mit einem wassermischbaren Co-Lösungsmittel (Alkanol, Glykol, Glyme), ja sogar mit wasserunlöslichen Lösemitteln zusammen appliziert werden.

Aus der DE-AS 18 16 980 sind Copolymeriate, die als temporäre Überzüge dienen können, bekannt, die durch Copolymerisation von Styrol, Vinylacetat und Crotonsäure in teilorganischer Phase erhalten werden können. Diesen wäßrigen Polymerdispersionen wird vor der Applikation Ammoniak zugesetzt.

Die EP 0 115 694 beschreibt Beschichtungsmittel, die mit wäßrigen Alkalien entfernt werden können, und erhältlich sind durch Copolymerisation von Methacrylsäure und/oder Acrylsäure und Alkylmethacrylaten und/oder Alkylacrylaten in wäßrigem Medium, die aus wäßriger Phase appliziert werden.

Beschichtungsmittel auf der Basis von Polyacrylatdispersionen, die aus organischer Phase appliziert werden, sind auch aus japanischen Offenlegungsschriften bekannt.

Chemical Abstracts, Vol 95 (1981), Seite 84, Referat 95: 63819 f offenbart in verdünntem wäßrigen Ammoniak lösliche Beschichtungsmittel, erhalten durch Copolymerisation von Styrol und Alkylmethacrylaten und/oder Alkylacrylaten mit Methacrylsäure und/oder Acrylsäure in Wasser oder wasserhaltigen Alkoholen, die nach der Copolymerisation aus ammoniakalischer Phase appliziert werden.

Chemical Abstracts, Vol 88 (1978), Seite 80, Referat 88: 106 923 k beschreibt in Natronlauge lösliche Beschichtungsmittel, erhalten durch Copolymerisation von Methacrylat und/oder Acrylat und Acrylsäure in wäßriger bzw. organischer Phase.

Der vorliegenden Erfindung liegt die Aufgabe zugrunde, eine neue wäßrige Polyacrylatdispersion bzw. Polyacrylatemsulsion zu schaffen. Diese soll einen nur schwach sauren pH-Wert aufweisen, so daß die Dispersion weniger korrosive Eigenschaften aufweist als übliche Dispersionen des Standes der Technik. Durch die Applikation aus wäßriger Phase entstehen weiterhin geringere Umweltprobleme. Die wäßrigen Polyacrylatdispersionen können Bestandteil von Beschichtungsmitteln sein und diese bilden auf Oberflächen nach dem Verdunsten des Wasseranteils einen klaren wasserfesten Film, der mit Hilfe von alkalischen Mitteln leicht zu entfernen ist.

Es wurde nun gefunden, daß eine nur ca. 5 bis 50 %ige Neutralisation der carboxylgruppenhaltigen Comonomeren vor Durchführung der Emulsionspolymerisation koagulatarme Polymerdispersionen ergibt, deren pH-Werte in dem gewünschten Bereich von 4 bis 6 liegen, obwohl Ausgangsemulsionen der Monomermischung in Wasser einen Wert von nur ca. 3,5 aufweisen.

Die Erfindung betrifft folglich wäßrige lösungsmittelfreie Polyacrylatdispersionen oder Polyacrylatemulsionen, erhältlich durch Copolymerisation in wäßrigem Medium von

(a) wenigstens einem mindestens eine Carboxylgruppe tragenden Monomeren,

(b) wenigstens einem anderen, hydrophoben Monomeren,

(c) wenigstens einem Emulgator, sowie

(d) gegebenenfalls üblichen Hilfs- und/oder Zusatzstoffen,

wobei das Gewichtsverhältnis (a) : (b) bei 1 : 20 bis 1 : 1, die Summe von (a) und (b) von 5 bis 55 Gew.-% und die Menge an (c) 0,05 bis 5 Gew.-% beträgt, wobei die Umsetzungstemperatur zwischen 40 und 100 °C liegt, dadurch gekennzeichnet, daß das Monomere (a) vor der Copolymerisation zu 5 bis 50 Mol-% neutralisiert worden ist und die nach der Copolymerisation erhaltene Polyacrylatdispersion bzw. Polyacrylatemulsion

(e) einen pH-Wert von über 4 bis 6 aufweist.

Die oben erwähnten wäßrigen, lösungsmittelfreien Polyacrylatdispersionen oder Polyacrylatemulsionen können als Beschichtungsmittel eingesetzt werden.

Geeignete, eine Carboxylgruppe tragende Monomere sind Acrylsäure, Methacrylsäure, Crotonsäure, Itaconsäure, Citraconsäure, Fumarsäure, Maleinsäure oder in der Polymerisationstechnik übliche Derivate dieser Säuren, beispielsweise Halogenacrylsäuren, wie etwa α-Chloracrylsäure, oder Anhydride oder Halbester der genannten Dicarbonsäuren. Diese können allein oder in Kombination mit anderen Carboxylgruppen tragenden Monomeren verwendet werden. Bevorzugt sind Methacrylsäure und/oder Acrylsäure.

Einen entscheidenden Einfluß auf die Eigenschaften der erfindungsgemäßen Polyacrylatdispersionen bzw. Polyacrylatemulsionen hat die Tatsache, daß diese Carboxylgruppen tragende Monomere enthalten, die vor der Copolymerisation zu 5 bis 50 Mol-% mit einer Base neutralisiert worden sind. Oberhalb von 50 Mol-% kommt es zu einer vermehrten Koagulatbildung, die sich nachteilig auf die Polyacrylatdispersionen bzw. Polyacrylatemulsionen und die hieraus erhaltenen Beschichtungsmittel auswirkt. Vorzugsweise wird ein Bereich von 5 bis 25 Mol%, besonders vorteilhaft von 10 bis 15 Mol-%, verwendet.

Als Neutralisierungsmittel können organische oder anorganische basische Verbindungen verwendet werden. Vorzugsweise wird Ammoniakwasser für die partielle Neutralisation verwendet.

Durch diese partielle Neutralisation der Carboxylgruppen tragenden Monomere vor der Copolymerisation werden erfindungsgemäß Polyacrylatdispersionen bzw. Polyacrylatemulsionen erhalten, die pH-Werte von 4 bis 6, vorzugsweise von 4,5 bis 5,5, aufweisen. Polyacrylatdispersionen bzw. Polyacrylatemulsionen mit derart schwach sauren pH-Werten können somit auch bei korrosionsgefährdeten Gegenständen verwendet werden.

Geeignete hydrophobe Monomere sind solche, die ausgewählt sind aus der Gruppe der Alkyl-acrylate, Alkyl-methacrylate, Hydroxyalkyl-acrylate, Hydroxyalkylmethacrylate, Vinylether, Vinylester, Vinylaromaten und ungesättigter Nitrile. Bevorzugt sind hydrophobe Monomere, ausgewählt aus der Gruppe der Alkyl-acrylate, Alkyl-methacrylate, Hydroxyalkyl-acrylate, Hydroxyalkyl-methacrylate, Styrol und Acrylnitril.

Als geeignete Emulgatoren können anionische Emulgatoren, insbesondere ein Alkylalkoholethoxysulfat und/oder Alkylphenolethoxysulfat oder deren Gemische verwendet werden.

Als übliche Hilfs- und/oder Zusatzstoffe im Sinne der vorliegenden Erfindung werden Radikalinitiatoren wie beispielsweise wasserlösliche Salze der Peroxydischwefelsäure, sowie ferner Farbstoffe, Pigmente und/oder Stabilisatoren verstanden.

3

Bei den erfindungsgemäßen Polyacrylatdispersionen bzw. Polyacrylatemulsionen kann das Gewichtsverhältnis des Carboxylgruppen tragenden Monomeren zum hydrophoben Monomeren bei 1 : 20 bis 1 : 1 liegen; die Summe der Monomeren kann 5 bis 55 Gew.-% betragen. Die Menge an Emulgator kann 0,05 bis 5 Gew.-% betragen und die Umsetzungstemperatur für die Copolymerisation kann zwischen 40 und 100 °C liegen.

Bei den erfindungsgemäßen Polyacrylatdispersionen bzw. Polyacrylatemulsionen wird die Copolymerisation so durchgeführt, daß, soweit die Monomeren zu (a) und zu (b) miteinander mischbar sind, man diese gemischt und zusammen in die die Komponenten (c) und (d) enthaltende Reaktionsmischung zutropft und soweit (a) und (b) nicht miteinander mischbar sind, man diese getrennt parallel zutropft.

Nach einer bevorzugten Ausführungsform der vorliegenden Erfindung werden wäßrige Polyacrylatdispersionen bzw. Polyacrylatemulsionen erhalten, indem man

(a) Acrylsäure und/oder Methacrylsäure, die mittels Ammoniak zu 10 - 15 Mol-% neutralisiert worden ist,

(b) hydrophoben Monomeren ausgewählt aus der Gruppe der Alkyl-acrylate, Alkyl-methacrylate, Hydroxyalkyl-acrylate, Hydroxyalkyl-methacrylate, Styrol und Acrylnitril, wobei das Gew.-%-Verhältnis von (a) : (b) zwischen etwa 22,5 : 77,5 und 10 : 90 liegt und (a) und (b) in einer Gesamtmenge von 10 bis 40 Gew.-% vorliegen,

(c) wenigstens eines anionischen Emulgators, wie insbesondere eines Alkylalkohol- bzw. Alkylphenolethoxysulfates in einer Menge von 0,2 bis 2 Gew.-%,

(d) wenigstens eines Radikalinitiators, sowie ferner Farbstoffen, Pigmenten und/oder Stabilisatoren in wäßrigem Medium copolymerisiert.

Die Erfindung betrifft außerdem Verfahren zur Herstellung wäßriger Polyacrylatdispersionen bzw. Polyacrylatemulsionen der oben beschriebenen Art, die dadurch gekennzeichnet sind, daß das mindestens eine Carboxylgruppe tragende Monomere vor der Copolymerisation zu 5 bis 50 Mol-% neutralisiert worden ist und die nach der Copolymerisation erhaltene Polyacrylatdispersion bzw. Polyacrylatemulsion einen pH-Wert von über 4 bis 6 aufweist.

Vorzugsweise kann dieses Monomere vor der Copolymerisation zu 5 bis 25 Mol-%, besonders bevorzugt zu 10 bis 15 Mol-% mit einer Base, vorzugsweise mit Ammoniakwasser, neutralisiert werden.

Vorzugsweise hat die so erhaltene Polyacrylatdispersion einen pH-Wert von 4,5 bis 5,5.

Weiterhin betrifft die vorliegende Erfindung schwach saure, leicht entfernbare Schutzüberzüge liefernde, lösemittelfreie, wäßrige Beschichtungsmittel auf Basis der oben erwähnten wäßrigen Polyacrylatdispersionen bzw. Polyacrylatemulsionen.

Dies sind schwach saure, leicht entfernbare Schutzüberzüge liefernde, lösemittelfreie, wäßrige Beschichtungsmittel auf Basis wäßriger Polyacrylatdispersionen bzw. Polyacrylatemulsionen, erhältlich durch Copolymerisation in wäßrigem Medium von

(a) wenigstens einem mindestens eine Carboxylgruppe tragenden Monomeren,

(b) wenigstens einem anderen hydrophoben Monomeren,

(c) wenigstens einem Emulgator, sowie

(d) gegebenenfalls üblichen Hilfs- und/oder Zusatzstoffen,

wobei das Gewichtsverhältnis (a) : (b) bei 1 : 20 bis 1 : 1, die Summe von (a) und (b) von 5 bis 55 Gew.-% und die Menge an (c) 0,05 bis 5 Gew.-% beträgt, wobei die Umsetzungstemperatur zwischen 40 und 100 °C liegt, die dadurch gekennzeichnet sind, daß das Monomere (a) vor der Copolymerisation zu 5 bis 50 Mol-% neutralisiert worden ist und die nach der Copolymerisation erhaltene Polyacrylatdispersion bzw. Polyacrylatemulsion

(e) einen pH-Wert von über 4 bis 6 aufweist.

Die erfindungsgemäßen Beschichtungsmittel werden auf Basis wäßriger Polyacrylatdispersionen bzw. Polyacrylatemulsionen durch Copolymerisation in wäßrigem Medium von wenigstens einem mindestens eine Carboxylgruppe tragenden Monomeren und wenigstens einem anderen, hydrophoben Monomeren erhalten.

Für die Darstellung der erfindungsgemäßen Beschichtungsmittel geeignete, eine Carboxylgruppe tragende Monomere sind Acrylsäure, Methacrylsäure, Crotonsäure, Itaconsäure, Citraconsäure, Fumarsäure, Maleinsäure oder in der Polymerisationstechnik übliche Derivate dieser Säuren, beispielsweise Halogenacrylsäuren, wie etwa α-Chloracrylsäure, oder Anhydride oder Halbester der genannten Dicarbonsäuren. Diese können allein oder in Kombination mit anderen Carboxylgruppen tragenden Monomeren verwendet werden. Bevorzugt sind Methacrylsäure und/ oder Acrylsäure.

Einen entscheidenden Einfluß auf die Eigenschaften der erfindungsgemäßen Beschichtungsmittel auf Basis wäßriger Polyacrylatdispersionen bzw. Polyacrylatemulsionen hat die Tatsache, daß diese Carboxylgruppen tragende Monomere enthalten, die vor der Copolymerisation zu 5 bis 50 Mol-% mit einer Base neutralisiert worden sind. Oberhalb von 50 Mol-% kommt es zu einer vermehrten Koagulatbildung, die sich nachteilig auf die Polyacrylatdispersionen bzw. Polyacrylatemulsionen und die hieraus erhaltenen erfindungsgemäßen Beschichtungsmittel auswirkt. Vorzugsweise wird ein Bereich von 5 bis 25 Mol%, besonders vorteilhaft von 10 bis 15 Mol-%, verwendet.

Als Neutralisierungsmittel können organische oder anorganische basische Verbindung verwendet werden. Vorzugsweise wird Ammoniakwasser für die partielle Neutralisation verwendet.

Durch diese partielle Neutralisation der Carboxylgruppen tragenden Monomere vor der Copolymerisation werden erfindungsgemäß Polyacrylatdispersionen bzw. Polyacrylatemulsionen erhalten, bei denen die Polyacrylatdispersion bzw. Polyacrylatemulsion pH-Werte von 4 bis 6, vorzugsweise von 4,5 bis 5,5, aufweisen. Polyacrylatdispersionen bzw. Polyacrylatemulsionen mit derart schwach sauren pH-Werten können somit auch bei korrosionsgefährdeten Gegenständen verwendet werden.

Für die Darstellung der erfindungsgemäßen Beschichtungsmittel geeignete hydrophobe Monomere sind solche, die ausgewählt sind aus der Gruppe der Alkyl-acrylate, Alkyl-methacrylate, Hydroxyalkyl-acrylate, Hydroxyalkyl-methacrylate, Vinylether, Vinylester, Vinylaromaten und ungesättigter Nitrile. Bevorzugt sind hydrophobe Monomere, ausgewählt aus der Gruppe der Alkyl-acrylate, Alkyl-methacrylate, Hydroxyalkyl-acrylate, Hydroxyalkyl-methacrylate, Styrol und Acrylnitril.

Für die Darstellung der erfindungsgemäßen Beschichtungsmittel geeignete Emulgatoren sind anionische Emulgatoren, insbesondere ein Alkylalkoholethoxysulfat und/ oder Alkylphenolethoxysulfat oder deren Gemische.

Für die Darstellung der erfindungsgemäßen Beschichtungsmittel übliche Hilfs- und/oder Zusatzstoffe sind Radikalinitiatoren wie beispielsweise wasserlösliche Salze der Peroxydischwefelsäure, sowie ferner Farbstoffe, Pigmente und/oder Stabilisatoren.

Bei den erfindungsgemäßen Beschichtungsmitteln auf Basis wäßriger Polyacrylatdispersionen bzw. Polyacrylatemulsionen kann das Gewichtsverhältnis des Carboxylgruppen tragenden Monomeren zum hydrophoben Monomeren bei 1 : 20 bis 1 : 1 liegen; die Summe der Monomeren kann 5 bis 55 Gew.-% betragen. Die Menge an Emulgator kann 0,05 bis 5 Gew.-% betragen und die Umsetzungstemperatur für die Copolymerisation kann zwischen 40 und 100 °C liegen.

Bei den erfindungsgemäßen Beschichtungsmitteln auf Basis wäßriger Polyacrylatdispersionen bzw. Polyacrylatemulsionen wird die Copolymerisation so durchgeführt, daß, soweit die Monomeren zu (a) und zu (b) miteinander mischbar sind, man diese gemischt und zusammen in die die Komponenten (c) und (d) enthaltende Reaktionsmischung zutropft und soweit (a) und (b) nicht miteinander mischbar sind, man diese getrennt parallel zutropft.

Nach einer bevorzugten Ausführungsform der vorliegenden Erfindung werden Beschichtungsmittel auf Basis wäßriger Polyacrylatdispersionen bzw. Polyacrylatemulsionen erhalten, indem man

(a) Acrylsäure und/oder Methacrylsäure, die mittels Ammoniak zu 10 - 15 Mol-% neutralisiert worden ist,

(b) hydrophoben Monomeren ausgewählt aus der Gruppe der Alkyl-acrylate, Alkyl-methacrylate, Hydroxyalkyl-acrylate, Hydroxyalkyl-methacrylate, Styrol und Acrylnitril, wobei das Gew.-%-Verhältnis von (a) : (b) zwischen etwa 22,5 : 77,5 und 10 : 90 liegt und (a) und (b) in einer Gesamtmenge von 10 bis 40 Gew.-% vorliegen,

(c) wenigstens eines anionischen Emulgators, wie insbesondere eines Alkylalkohol- bzw. Alkylphenolethoxysulfates in einer Menge von 0,2 bis 2 Gew.-%,

(d) wenigstens eines Radikalinitiators, sowie ferner Farbstoffen, Pigmenten und/oder Stabilisatoren

in wäßrigem Medium copolymerisiert und diese Dispersionen bzw. Emulsionen als temporären Oberflächenschutz auf metallische und/oder lackierte Oberflächen aufbringt.

Die Erfindung betrifft außerdem Verfahren zur Herstellung von Beschichtungsmitteln auf Basis wäßriger Polyacrylatdispersionen bzw. Polyacrylatemulsionen der oben beschriebenen Art, die dadurch gekennzeichnet sind, daß das mindestens eine Carboxylgruppe tragende Monomere vor der Copolymerisation zu 5 bis 50 Mol-% neutralisiert worden ist und die nach der Copolymerisation erhaltene Polyacrylatdispersion bzw. Polyacrylatemulsion einen pH-Wert von über 4 bis 6 aufweist.

Vorzugsweise kann dieses Monomere vor der Copolymerisation zu 5 bis 25 Mol-%, besonders bevorzugt zu 10 bis 15 Mol-%, mit einer Base, vorzugsweise mit Ammoniakwasser, neutralisiert werden.

Vorzugsweise hat die so erhaltene Polyacrylatdispersion einen pH-Wert von 4,5 bis 5,5.

Schließlich betrifft die Erfindung die Verwendung von wäßrigen Polyacrylatdispersionen bzw. Polyacrylatemulsionen und Beschichtungsmitteln der oben beschriebenen Art zum temporären Oberflächenschutz, insbesondere von metallischen und/oder lackierten Oberflächen, wie Autokarosserien und sonstigen Gegenständen, die in freier Atmosphäre gelagert werden, gegen klimatische und/oder mechanische Einflüsse.

Die erfindungsgemäßen Polyacrylatdispersionen bzw. Polyacrylatemulsionen werden im folgenden durch Herstellungsbeispiele und Anwendungsbeispiele erläutert.

Allgemeine Herstellvorschriften

A) Wenn die teilneutralisierten Carboxylgruppen tragenden Comonomeren bei Raumtemperatur in der Mischung der restlichen Comonomeren löslich sind, kann mit nur einem Monomerenzulauf gearbeitet werden:

In einem Reaktionsgefäß, das ca. 150 Volumenteile faßt und mit Rückflußkühler, Rührwerk und Zudosiergefäß versehen ist, werden 67,7 Gew.-Teile Wasser, 2 Gew.-Teile einer 30 %igen wäßrigen Lösung eines üblichen Ethersulfatemulgators (z.B. Disponil® AES 60, HENKEL) und 0,3 Gew.-Teile Ammoniumperoxydisulfat auf 80 °C erhitzt. Bei dieser Temperatur werden innerhalb von zwei Stunden 30 Gew.-Teile einer Monomerenmischung, deren Carboxylgruppen tragende Anteile mit 25 %igem Ammoniak zu 15 % neutralisiert wurden, gleichmäßig zugetropft. Nach Erkalten des Ansatzes wird das in einer Menge von 0,03 bis 0,5 Gew.-Teilen gebildeten Koagulat über einen Filtersiebbeutel der Maschenweite 80 bis 250 μm abgetrennt.

B) Generell kann auch mit mehr als einem Zulauf gearbeitet werden.

Dies empfiehlt sich insbesondere dann, wenn die teilneutralisierten Carboxylgruppen trangenden Comonomeren in der Mischung der übrigen Monomeren unlöslich sind:

In einem Reaktionsgefäß, das ca. 150 Volumenteile faßt und mit Rückflußkühler, Rührwerk und zwei Dosiergefäßen versehen ist, werden 67,7 Gew.-Teile Wasser, 2 Gew.-Teile einer 30 %igen wäßrigen Lösung eines üblichen Ethersulfatemulgators (z.B. Disponil® AES 60, HENKEL) und 0,3 Gew.-Teile Ammoniumperoxidisulfat vorgelegt und auf 80 °C erhitzt. Bei dieser Temperatur werden innerhalb von 2 Stunden 30 Gew.-Teile einer Mischung der Carboxylgruppen freien Monomeren und der zu 6,5 bis 17 % (s. Tabelle) mit 25 %igem Ammoniak neutralisierten carboxylgruppentragenden Monomeren (evtl. gelöst in einer geringen Menge Wasser, die erforderlichenfalls vom Wasser in der Vorlagemischung eingespart wurde) parallel zugetropft. Es wird 30 Minuten bei 80 °C nachgerührt. Nach Erkalten des Ansatzes wird das in einer Menge von 0,03 bis 1,5 Gew.-Teilen gebildete Koagulat über einen Filtersiebbeutel der Maschenweite 80 bis 250 μm abgetrennt.

In der Tabelle werden für die Monomere folgenden Abkürzungen verwendet:

AS = Acrylsäure;
MAS = Methacrylsäure;
BuA = n-Butylacrylat;
EA = Ethylacrylat;
EMA = Ethylmethacrylat;
MA = Methylacrylat;
MMA = Methylmethacrylat.

T a b e l l e : Einzelbeispiele

| Monomerbaustein Zusammensetzung (Gew.-%) | Polymerisations-methode | Neutralisationsgrad der eingesetzten Monomersäure | pH-Wert vor der Polymerisation[1] | pH-Wert nach der Polymerisation |
|---|---|---|---|---|
| 56 BuA; 21.5 MMA; 15 AS; 7,5 MAS | A | | | 4,5 |
| 63 EA;25 EMA;12 AS | | 15 % | 3 - 3,5 | 4,7 |
| 87 EA;13 MAS | | | | 5,7 |
| 79 EA;8 Styrol;13 MAS | B | 15 % | 4,0 | 5,5 |
| 78 MA;12 MMA;10 MAS | | 6,5 % | 3,5 | 5,2 |
| 50 EA;30 MMA;20 AS | | 17 % | 3,5 | 4,5 |

1) gewonnen an einer separat hergestellten Monomerenemulsion in Fall A (die Meßwerte der Monomerenemulsionen streuen etwas) bzw. an einer ca. 50 %igen wäßrigen Lösung der teilneutralisierten Carboxylgruppen tragenden Komponenten in Fall B.

Anwendungsbeispiel

Die nach vorstehenden Herstellverfahren A mit der Zusammensetzung 70 Gew.-% EA, 20 Gew.-% EMA und 10 Gew.-% AS erhaltene wäßrige Polyacrylatdispersion besaß folgende Eigenschaften und wurde als

Beschichtungsmittel getestet.

| | |
|---|---|
| Aktivsubstanzgehalt der Dispersion: | 20 % |
| UV-Absorber: | 0,4 % Uvinul DS-49 (2,2'-Dihydroxy-4,4'-di-methoxybenzophenon-5,5'-dinatriumsulfonat) |
| Bestimmung pH-Wert (Glaselektrode pH-Papier): | 4,8 |
| Bestimmung CSB-Wert [*1] (Dr. Lange-Küvettenmethode): | 390 mg $O_2$/g |
| Bestimmung Viskosität (Ford-Becher, 4 mm-Düse): | 11 sec. |
| Bestimmung Flammpunkt (Abel Pensky): | > 100 °C |
| Coconnage-Beschichtung bei Raumtemperatur a) Glasplatte: b) Stahlblech : (Pinsel bzw. Sprühpistole) | 10 - 20 μm 10 - 20 μm |
| Flächen-Benetzung bei Raumtemperatur a) Glasplatte: b) Stahlblech: | gut gut |

Trocknung der applizierten
Coconnage bei Raumtemperatur

a) Glasplatte:                          20 - 25 min.

b) Stahlblech:                          20 - 25 min.


Wasserbenetzbarkeit des applizierten
Coconnage-Films bei Raumtemperatur

a) nach 1 Stunde:                       Film nach ca. 30 min. weiß


b) nach 24 Stunden:                     Film nach ca. 60 min. weiß


(Testkörper aus Glas bzw. Stahl        Filme werden nach Trockwerden in ein mit destilliertem Was-   nung bei Raumtemperatur
ser gefülltes Becherglas gestellt,     wieder transparent.
so daß der zu prüfende Coconnage-Film
während der gesamten Prüfzeit mit
Wasser bedeckt ist)


Die mit Coconnage applizierten Testkörper werden für einen Zeitraum von
16 Stunden in einem Umluftraum-
Trockenschrank bei + 80 °C getrocknet.


Anschließend UV-Bestrahlung der
Coconnage


6 Stunden bei ca. 80 °C mit Philipps-
Lampe H P L R 400 Abstand der Lichtquelle vom Objekt ca. 39 cm


Verhalten der applizierten Coconnage-
Filme nach Wärmebehandlung unter
Renault-Bedingungen

a) Glasplatte:                          harter Film

b) Stahlblech:                          harter Film

Ablösung der applizierten Coconnage-Schicht mit Decoconnage gemäß DE-OS 33 16 876

Applikation der Decoconnage mittels Pinsel oder Sprühpistole

Einwirkzeit

Abspülen der gelösten Coconnage mit Wasser (Handdusche)

a) Glasplatte:                                    nach 5 - 10 min.

b) Stahlblech:                                    nach 5 - 10 min.

---

*1

: chemischer Sauerstoffbedarf (dient zur Bestimmung der im Wasser enthaltenen, chemisch oxidierbaren organischen Stoffe).

Ergebnis der Anwendungstests als Beschichtungsmittel:

Die erfindungsgemäße Poylacrylatdispersion zeigt eine gute Flächenbenetzbarkeit auf Stahl und Glas, trocknet innerhalb kurzer Zeit zu einem transparenten und harten Schutzfilm und läßt sich mittels praxiserprobter Decoconnagelösungen leicht wieder entfernen.

**Patentansprüche**

1.  Wäßrige, lösungsmittelfreie Polyacrylatdispersionen oder Polyacrylatemulsionen, erhältlich durch Copolymerisation in wäßrigem Medium von
    (a) wenigstens einem mindestens eine Carboxylgruppe tragenden Monomeren,
    (b) wenigstens einem anderen, hydrophoben Monomeren,
    (c) wenigstens einem Emulgator, sowie
    (d) gegebenenfalls üblichen Hilfs- und/oder Zusatzstoffen,
    wobei:
    (e) das Gewichtsverhältnis (a) : (b) im Bereich 1 : 20 bis 1 : 1,
    (f) die Summe von (a) und (b) im Bereich von 5 bis 55 Gew.-%,
    (g) die Menge an (c) im Bereich von 0,05 bis 5 Gew.-% und
    (h) die Umsetzungstemperatur im Bereich von 40 bis 100 °C liegen
    und wobei
    (i) das Monomere (a) vor der Copolymerisation zu 5 bis 50 Mol-% neutralisiert worden ist und
    (j) die nach der Copolymerisation erhaltene Polyacrylatdispersion oder Polyacrylatemulsion einen pH-Wert von über 4 bis 6 aufweist.

2.  Dispersion nach Anspruch 1, dadurch gekennzeichnet, daß man das Carboxylgruppen tragende Monomere vor der Copolymerisation zu 5 bis zu 25 Mol-%, vorzugsweise zu 10 bis 15 Mol-%, mit einer Base, vorzugsweise mit Ammoniakwasser, neutralisiert.

3. Dispersion nach Ansprüchen 1 und 2, dadurch gekennzeichnet, daß diese einen pH-Wert von 4,5 bis 5,5 aufweist.

4. Dispersion nach Ansprüchen 1 bis 3, dadurch gekennzeichnet, daß das Carboxylgruppen tragende Monomere ausgewählt ist aus der Gruppe der Acrylsäure, Methacrylsäure, Crotonsäure, Itaconsäure, Citraconsäure, Fumarsäure, Maleinsäure oder in der Polymerisationstechnik üblicher Derivate dieser Säuren.

5. Dispersion nach Anspruch 4, dadurch gekennzeichnet, daß man als Carboxylgruppen tragendes Monomeres Methacrylsäure und/oder Acrylsäure verwendet.

6. Dispersion nach Ansprüchen 1 bis 5, dadurch gekennzeichnet, daß das hydrophobe Monomere ausgewählt ist aus der Gruppe der Alkylacrylate, Alkyl-methacrylate, Hydroxyalkyl-acrylate, Hydroxyalkyl-methacrylate, Vinylether, Vinylester, Vinylaromaten und ungesättigter Nitrile.

7. Dispersion nach Anspruch 6, dadurch gekennzeichnet, daß das hydrophobe Monomere ausgewählt ist aus der Gruppe der Alkyl-acrylate, Alkyl-methacrylate, Hydroxyalkyl-acrylate, Hydroxyalkylmethacrylate, Styrol und Acrylnitril.

8. Dispersion nach Ansprüchen 1 bis 7, dadurch gekennzeichnet, daß man als Emulgator einen anionischen Emulgator, insbesondere ein Alkylalkoholethoxysulfat und/oder Alkylphenolethoxysulfat verwendet, oder deren Gemische.

9. Dispersion nach Ansprüchen 1 bis 8, dadurch gekennzeichnet, daß sie erhältlich ist durch Copolymerisation in wäßrigem Medium von
    (a) Acrylsäure und/oder Methacrylsäure, die mittels Ammoniak zu 10 - 15 Mol-% neutralisiert worden sind,
    (b) hydrophoben Monomeren ausgewählt aus der Gruppe der Alkyl-acrylate, Alkyl-methacrylate, Hydroxyalkyl-acrylate, Hydroxyalkyl-methacrylate, Styrol und Acrylnitril, wobei das Gew.-%-Verhältnis von (a) : (b) zwischen 22,5 : 77,5 und 10 : 90 liegt und (a) und (b) in einer Gesamtmenge von 10 bis 40 Gew.-% vorliegen,
    (c) wenigstens eines anionischen Emulgators, insbesondere eines Alkylalkohol- oder Alkylphenolethoxysulfates, in einer Menge von 0,2 bis 2 Gew.-%,
    (d) wenigstens eines Radikalinitiators, sowie ferner Farbstoffen, Pigmenten und/oder Stabilisatoren.

10. Verfahren zur Herstellung wäßriger Polyacrylatdispersionen oder Polyacrylatemulsionen nach Ansprüchen 1 bis 9, dadurch gekennzeichnet, daß das mindestens eine Carboxylgruppe tragende Monomere vor der Copolymerisation zu 5 bis 50 Mol-% neutralisiert worden ist und die nach Copolymerisation erhaltene Polyacrylat-dispersion oder Polyacrylatemulsion einen pH-Wert von über 4 bis 6, insbesondere von 4,5 bis 5,5, aufweist.

11. Verfahren nach Anspruch 10, dadurch gekennzeichnet, daß man das Carboxylgruppen tragende Monomere vor der Copolymerisation zu 5 bis zu 25 Mol-%, vorzugsweise zu 10 bis 15 Mol-%, mit einer Base, vorzugsweise mit Ammoniakwasser, neutralisiert.

12. Verfahren nach Ansprüchen 10 und 11, dadurch gekennzeichnet, daß man die Copolymerisation so durchführt, daß, soweit die Monomeren zu (a) und zu (b) miteinander mischbar sind, man diese gemischt und zusammen in die die Komponenten (c) und (d) enthaltende Reaktionsmischung zutropft und soweit (a) und (b) nicht miteinander mischbar sind, man diese getrennt parallel zutropft.

13. Verwendung der wäßrigen Polyacrylatdispersionen oder Polyacrylatemulsionen nach Ansprüchen 1 bis 9 als schwach saure, leicht entfernbare Schutzüberzüge liefernde, lösungsmittelfreie, wäßrige Beschichtungsmittel.

14. Verwendung nach Anspruch 13 zum temporären Oberflächenschutz insbesondere von metallischen und/oder lackierten Oberflächen wie Autokarosserien und sonstigen Gegenständen, die in freier Atmosphäre gelagert werden, gegen klimatische und/oder mechanische Einflüsse.

EP 0 311 906 B1

**Claims**

1. Aqueous solvent-free polyacrylate diapersions or polyacrylate emulsions obtainable by copolymerization in aqueous medium of

    (a) at least one monomer containing at least one carboxyl group,
    (b) at least one other, hydrophobic monomer,
    (c) at least one emulsifier and
    (d) optionally standard auxiliaries and/or additives,
    (e) the ratio by weight of (a) to (b) being 1:20 to 1:1,
    (f) the sum of (a) and (b) being 5 to 55% by weight,
    (g) the quantity of (c) being 0.05 to 5% by weight and
    (h) the reaction temperature being in the range from 40 to 100 °C,
    (i) 5 to 50 mol-% of monomer (a) being neutralized before copolymerization and
    (j) the polyacrylate dispersion or polyacrylate emulsion obtained after copolymerization having a pH value above 4 to 6.

2. A dispersion as claimed in claim 1, characterized in that 5 to 25 mol-% and preferably 10 to 15 mol-% of the monomer containing carboxyl groups is neutralized with a base, preferably ammonia water before copolymerization.

3. A dispersion as claimed in claims 1 and 2, characterized in that it has a pH value of 4.5 to 5.5.

4. A dispersion as claimed in claims 1 to 3, characterized in that the carboxyfunctional monomer is selected from the group consisting of acrylic acid, methacrylic acid, crotonic acid, itaconic acid, citraconic acid, fumaric acid, maleic acid or derivatives of these acids commonly used in the polymerization field.

5. A dispersion as claimed in claim 4 characterized in that methacrylic acid and/or acrylic acid is used as the carboxyfunctional monomer.

6. A dispersion as claimed in claims 1 to 5, characterized in that the hydrophobic monomer is selected from the group consisting of alkyl acrylates, alkyl methacrylates, hydroxyalkyl acrylates, hydroxyalkyl methacrylates, vinyl ethers, vinyl esters, aromatic vinyl compounds and unsaturated nitriles.

7. A dispersion as claimed in claim 6, characterized in that the hydrophobic monomer is selected from the group consisting of alkyl acrylates, alkyl methacrylates, hydroxyalkyl acrylates, hydroxyalkyl methacrylates, styrene and acrylonitrile.

8. A dispersion as claimed in claims 1 to 7, characterized in that the emulsifier used is an anionic emulsifier, more especially an alkyl alcohol ethoxysulfate and/or an alkyl phenol ethoxysulfate or a mixture thereof.

9. A dispersion as claimed in claims 1 to 8, characterized in that it is obtainable by copolymerization in aqueous medium of

    (a) acrylic cid and/or methacrylic acid, of which from 10 to 15 mol-% have been neutralized with ammonia,
    (b) hydrophobic monomers selected from the group consisting of alkyl acrylates, alkyl methacrylates, hydroxyalkyl acrylates, hydroxyalkyl methacrylates, styrene and acrylonitrile, the % ratio by weight of (a) to (b) being 22.5:77.5 to 10:90 and (a) and (b) being present in a total quantity of 10 to 40% by weight,
    (c) at least one anionic emulsifier, in particular an alkyl alcohol or alkylphenol ethoxysulfate, in a quantity of 0.2 to 2% by weight,
    (d) at least one radical initiator and, also, dyes, pigments and/or stabilizers.

10. A process for the production of aqueous polyacrylate dispersions or polyacrylate emulsions as claimed in claims 1 to 9, characterized in that 5 to 50 mol-% of the monomer containing at least one carboxyl group has been neutralized before copolymerization and the polyacrylate dispersion or polyacrylate emulsion obtained after copolymerization has a pH value above 4 to 6 and preferably 4.5 to 5.5.

12

**11.** A process as claimed in claim 10, characterized in that 5 to 25 mol-% and preferably 10 to 15 mol-% of the carboxyfunctional monomer is neutralized with a base, preferably ammonia water, before copolymerization.

**12.** A process as claimed in claim 10 or 11, characterized in that copolymerization is carried out by mixing monomers (a) and (b) where they are miscible with one another and introducing the resulting mixture dropwise into the reaction mixture containing components (c) and (d) and, where (a) and (b) are not miscible with one another, separately adding them dropwise at one and the same time.

**13.** The use of aqueous polyacrylate dispersions or polyacrylate emulsions as claimed in claims 1 to 9 as mildly acidic solventless, water-based coating compositions which form readily removable protective coatings.

**14.** The use as claimed in claim 13 for temporary surface protection particularly of metallic and/or lacquered surfaces, such as car bodies and other objects, which are stored in the open air, against climatic and/or mechanical influences.

**Revendications**

**1.** Dispersions ou émulsions aqueuses de polyacrylate, exemptes de solvants, obtenables par copolymérisation dans un milieu aqueux
   (a) d'au moins un monomère portant au moins un groupe carboxyle,
   (b) d'au moins un autre monomère hydrophobe,
   (c) d'au moins un émulsifiant, ainsi que
   (d) le cas échéant, d'adjuvants et/ou additifs usuels,
dans lesquelles:
   (e) le rapport pondéral (a):(b) est compris dans la plage s'étendant de 1:20 à 1:1,
   (f) la somme de (a) et de (b) se situe dans l'intervalle compris entre 5 et 55 % en poids,
   (g) la quantité de (c) est comprise dans la plage s'étendant de 0,05 à 5 % en poids et
   (h) la température de réaction se situe dans l'intervalle de 40 à 100 °C
et dans lesquelles
   (i) le monomère (a) est neutralisé à raison de 5 à 50 moles % avant la copolymérisation et
   (j) la dispersion ou l'émulsion de polyacrylate obtenue après la copolymérisation présente un pH de plus de 4 à 6.

**2.** Dispersion selon la revendication 1, caractérisée en ce que l'on neutralise le monomère portant des groupes carboxyle avant la copolymérisation, à raison de 5 à 25 moles %, de préférence à raison de 10 à 15 moles %, à l'aide d'une base, de préférence avec de l'eau ammoniacale.

**3.** Dispersion selon les revendications 1 et 2, caractérisée en ce qu'elle présente un pH compris entre 4,5 et 5.5.

**4.** Dispersion selon les revendications 1 à 3, caractérisée en ce que le monomère portant les groupes carboxyle est sélectionné parmi le groupe formé des acides acrylique, méthacrylique, crotonique, itaconique, citraconique, fumarique, maléique ou des dérivés de ces acides, qui sont usuels en technologie de polymérisation.

**5.** Dispersion selon la revendication 4, caractérisée en ce que l'on utilise, comme monomère portant des groupes carboxyle, de l'acide méthacrylique et/ou acrylique.

**6.** Dispersion selon les revendications 1 à 5, caractérisée en ce que le monomère hydrophobe est sélectionné parmi le groupe formé des alkyl-acrylate, alkyl-méthacrylate, hydroxyalkyl-acrylate, hydroxyalkyl-méthacrylate, éther vinylique, ester vinylique, composés aromatiques vinyliques et nitriles insaturés.

**7.** Dispersion selon la revendication 6, caractérisée en ce que le monomère hydrophobe est sélectionné parmi le groupe constitué des alkyl-acrylates, alkyl-méthacrylates, hydroxyalkyl-acrylates, hydroxyalkyl-méthacrylates, styrène et acrylonitrile.

**8.** Dispersion selon les revendications 1 à 7, caractérisée en ce que l'on utilise, comme émulsifiant, un émulsifiant anionique, en particulier un éthoxysulfate d'alcool alkylique et/ou un éthoxysulfate d'alkylphénol ou des mélanges de ceux-ci.

**9.** Dispersion selon les revendications 1 à 8, caractérisée en ce qu'elle est obtenable par copolymérisation dans un milieu aqueux

(a) d'acide acrylique et/ou méthacrylique, qui ont été neutralisés à raison de 10 à 15 moles % à l'aide d'ammoniaque,

(b) de monomères hydrophobes sélectionnés parmi le groupe constitué des alkyl-acrylates, alkyl-méthacrylates, hydroxyalkyl-acrylates, hydroxyalkyl-méthacrylates, styrène et acrylonitrile, le rapport des % en poids de (a):(b) étant compris entre 22,5:77,5 et 10:90 et (a) et (b) étant présents dans une proportion totale allant de 10 à 40 % en poids,

(c) d'au moins un émulsifiant anionique, en particulier un éthoxysulfate d'alcool alkylique ou un éthoxysulfate d'alkylphénol, dans une proportion comprise entre 0,2 et 2 % en poids,

(d) d'au moins un initiateur radicalaire, ainsi que de colorants, pigments et/ou stabilisants.

**10.** Procédé de fabrication de dispersions ou d'émulsions aqueuses de polyacrylate selon les revendications 1 à 9, caractérisé en ce que le monomère portant au moins un groupe carboxyle est neutralisé à raison de 5 à 50 moles % avant la copolymérisation et en ce que la dispersion ou l'émulsion de polyacrylate obtenue après la copolymérisation présente un pH de plus de 4 à 6, en particulier compris entre 4,5 et 5,5.

**11.** Procédé selon la revendication 10, caractérisé en ce que l'on neutralise le monomère portant des groupes carboxyle avant la copolymérisation, à raison de 5 à 25 moles %, de préférence à raison de 10 à 15 moles %, à l'aide d'une base, de préférence de l'eau ammoniacale.

**12.** Procédé selon les revendications 10 à 11, caractérisé en ce que l'on opère la copolymérisation, de manière telle que dans la mesure où les monomères (a) et (b) sont miscibles entre eux, on ajoute ceux-ci mélangés et ensemble, goutte à goutte dans le mélange réactionnel renfermant les composants (c) et (d), et dans la mesure où (a) et (b) ne sont pas miscibles entre eux, on ajoute ceux-ci goutte à goutte en parallèle.

**13.** Utilisation des dispersions ou des émulsions aqueuses de polyacrylate selon les revendications 1 à 9, comme agents d'enduction aqueux, légèrement acides, exempts de solvants, fournissant des revêtements protecteurs faciles à éliminer.

**14.** Utilisation selon la revendication 13 pour la protection temporaire contre les influences climatiques et/ou mécaniques de surfaces, en particulier des surfaces métalliques et/ou émaillées, telles que carrosseries d'automobiles et autres objets entreposés à l'air libre.